# EUROPÄISCHE PATENTSCHRIFT

(11) **EP 1 062 771 B1**
(45) Veröffentlichungstag und Bekanntmachung des Hinweises auf die Patenterteilung: **11.05.2005**
(21) Anmeldenummer: 99910261.9
(22) Anmeldetag: 23.02.1999
(51) Int. Cl.: H04L 12/44

(54) **DATENBUS FÜR MEHRERE TEILNEHMER**
DATA BUS FOR A PLURALITY OF NODES
BUS DE DONNEES POUR PLUSIEURS NOEUDS

(30) Priorität: 10.03.1998 DE 19810290
(43) Veröffentlichungstag der Anmeldung: 27.12.2000
(73) Patentinhaber: Bayerische Motoren Werke Aktiengesellschaft, 80809 München (DE)
(72) Erfinder: PELLER, Martin, D-82256 Fürstenfeldbruck (DE); BERWANGER, Josef, D-85586 Poing (DE); GRIESSBACH, Robert, D-83629 Weyarn (DE); SMUK, Karel, D-85301 Schweitenkirchen (DE)
(86) Internationale Anmeldenummer: PCT/EP1999/001162
(87) Internationale Veröffentlichungsnummer: WO 1999/046891

(56) Entgegenhaltungen:
- EP-A- 0 292 072
- WO-A-90/09710
- WO-A-91/06447
- US-A- 4 644 587

## Beschreibung

Die Erfindung bezieht sich auf einen Datenbus für mehrere Teilnehmer, die über einen Sternkoppler miteinander verbunden sind. Ein derartiger Datenbus ist aus der nicht vorveröffentlichten deutschen Patentanmeldung DE 19720401 A1 bekannt. Dabei sind die Teilnehmer über Sende-/Empfangsmodule am Datenbus angeschlossen. Insbesondere dann, wenn Teilnehmer am Datenbus angeschlossen sind, die ein optisches Datentelegramm aufgeben, kann es zur Fehlfunktion eines Busteilnehmers (z.B. ständiges Senden von Telegrammen) oder einem Fehler in einem Sende/Empfangsmodul (z.B. wenn der Ausgang eines im Sende-/Empfangsmodul eingesetzten optisch/elektrischen Wandlers auch außerhalb des Signalverkehrs auf dem eigentlich nur bei Signalverkehr auftretenden Low-Pegel bleibt) die Buskommunikation blockiert. Die Fehlerquelle kann in diesem Fall nicht automatisch ermittelt werden. Es ist auch nicht möglich automatisch einzugreifen. Die Buskommunikation bleibt bis zur Reparatur gestört.

Der Erfindung liegt die Aufgabe zugrunde, einen Datenbus der eingangs genannten Art zu schaffen, der die Möglichkeit bietet, den Datenverkehr auf dem Datenbus zu überwachen und insbesondere einen Teilnehmer von der Buskommunikation auszuschließen.

Die Erfindung löst diese Aufgabe mit den Mitteln des Patentanspruchs 1.

Diese Lösung besteht aus einer Reihe von Einzeimaßnahmen, die in Kombination die gewünschte Wirkung zeigen. Zum einen werden ggf. auftretende optische Signale in elektrische Form umgewandelt und als Eingangssignale dem Sternkoppler in elektrischer Form zugeführt. Der Stemkoppler selbst enthält ein logisches Entscheidungsglied, auf das die Eingangssignale geführt sind und dessen Ausgang über eine elektrische Leitung parallel an den Eingängen der Teilnehmer angeschlossen ist.

Im Gegensatz dazu ist bei einem Datenbus, wie er aus dem Artikel "A Network Architecture with Distributed Switching Function for Optical Fiber Links", Proceedings Computer Networks Compcon 82 Fall, 10.-23. September 1982, p.478-483, XP002107869, bekannt ist, gerade bei einer Vielzahl von Teilnehmern der Leistungsbedarf abhängig von der Zahl der Teilnehmer hoch, da dieser Datenbus physikalisch ein derartiges integriertes Entscheidungsglied nicht enthält. Bei diesem Datenbus ist jeder Teilnehmer mit seinem Ausgang an den Eingängen aller anderen Teilnehmer angeschlossen mit der Folge eines hohen Ausgangsleistungsbedarfs jedes Teilnehmers gerade bei einer Vielzahl von Teilnehmern, da dieser Bedarf mit der Zahl der Teilnehmer steigt. Im Gegensatz dazu ist bei der Erfindung der Leistungsbedarf innerhalb des Sternkopplers unabhängig von der Zahl der Teilnehmer und aufgrund der Verwendung eines physikalischen Entscheidungsgliedes gering.

Jedem Eingang des Entscheidungsglieds ist bei der Erfindung femer ein Schalter parallel geschaltet der bei ggf. aktivierbar ist und der die Übertragungstrecke zwischen dem Teilnehmer und dem Entscheidungsglied unterbricht und damit den Teilnehmer vom Datenbus abtrennt.

In diesem Zusammenhang ist es aus der EP-A-0292072 bekannt, jedem Teilnehmer eine individuelle Hintereinanderschaltung von Logik- und Speichergliedem zuzuordnen mit dem Ziel, während des Sendebetriebs eines Teilnehmers einen Sendebetrieb der anderen Teilnehmer zu unterbinden. Die Logik- und Speicherglieder sind dazu mit allen anderen Teilnehmern verbunden. Ein individuelles Ausblenden eines Teilnehmers ist damit nicht möglich. Aus der US 4,644,587 sind bei einem optischen Datenbus Kollisionsverhinderungsmechanismen bekannt, die im Falle einer Kollision die Signalverteilung unterbrechen. Dies hat mit dem Problem, das der Erfindung zugrunde liegt, nichts zu tun.

Bei dem aus WO 90/09710 bekannten Datenbus wird der an einem Eingang eines beliebigen Tores anstehende Signalstrom nur an Ausgänge aller anderen Tore weitergegeben. Die Empfänger der anderen Tore werden for die Dauer des Signalstroms gegen einlaufende Signale blockiert.

Eine vorteilhafte Ausgestaltung der Erfindung ist im Patentanspruch 2 angegeben. Durch die Adressierbarkeit des Schalters ist es auf einfache Weise möglich, im Bedartsfall nur einen einzigen Teilnehmer vom datenbus abzutrennen.

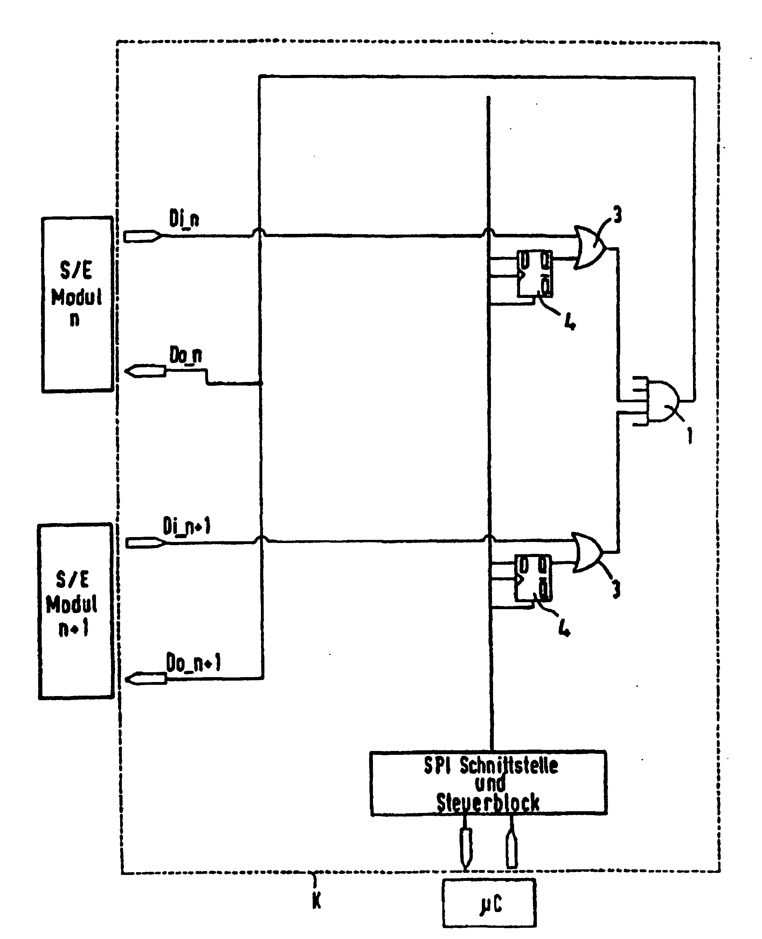

Anhand der einzigen Figur ist die Erfindung weiter erläutert. Darin ist ausschnittsweise ein erfindungsgemäßer Datenbus dargestellt, bei dem der Sendebetrieb der Teilnehmer überwacht wird.

An einem Datenbus D sind hier dargestellt zwei Teilnehmer Tₙ und Tₙ₊₁ über S/E (Sende/Empfangs-) Module S/Eₙ und S/Eₙ₊₁ angeschlossen. Die Module S/Eₙ und S/Eₙ₊₁ wandeln von den Teilnehmern Tₙ und Tₙ₊₁ kommende optische Telegramme in elektrische Form um und geben diese Signale Diₙ, Diₙ₊₁ als Eingangssignale, auf ein logisches Entscheidungsglied (UND-Gatter 1) als zentraler Bestandteil eines Sternkopplers K weiter. Die Zahl der Eingänge des UND-Gatter 1 entspricht der Anzahl der Busteilnehmer. Der Ausgang des UND-Gatters treibt alle Eingänge (Doₙ, Doₙ₊₁) der Module S/Eₙ und S/Eₙ₊₁. Diese wandeln diese elektrischen Signale in optische Signale um und übertragen diese optischen Signale über nicht dargestellte optische Übertragungstrecken zu den Teilnehmern Tₙ und Tₙ₊₁.

Jedem Busteilnehmer-Eingang am Stemkoppler K ist ein Schalter zugeordnet, der aus einem ODER-Gatter 3 und einem Steuerregister 4 besteht. Das ODER-Gatter 3 ist in jedem Eingangspfad des UND-Gatters 1 vorgesehen. Sein zweiter Eingang ist mit dem Ausgang des Steuerregisters 4 verbunden.

Ist es erforderlich, einen Teilnehmer von der Buskommunikation auszuschließen, so kann über eine serielle Schnittstelle (z.B. SPI) von einem Microcontroller uC aus das zugehörige Steuerregister 4 angesteuert werden. Dieses liefert einen High-Pegel zum zugehörigen ODER-Gatter 3. Dadurch kann sich ein Low-Pegel an diesem Eingang des Sternkopplers nicht mehr durchsetzen. Der angeschlossene Teilnehmer kann den Busverkehr nicht mehr beeinflussen. Ist der Fehler beseitigt, kann der Schalter wieder geschlossen werden, d.h. das Steuerregister 4 deaktiviert und das ODER-Gatter 3 für einen Low-Pegel wieder durchlässig gemacht werden

## Patentansprüche

1. Datenbus für mehrere Teilnehmer, die über einen Sternkoppler (K) miteinander verbunden sind, **dadurch gekennzeichnet, dass** die Eingangssignale (Di_n, Di_n+1,..) des Stemkopplers in elektrischer Form vorliegen, dass der Sternkoppler ein logisches Entscheidungsglied (1) enthält, an dessen Eingänge die Ausgänge der Teilnehmer angeschlossen sind und auf das die Eingangssignale (Di_n, Di_n+1,..) geführt sind, dass der Ausgang des Entscheidungsglieds im Stemkoppler über eine elektrische Leitung parallel an den Eingängen (Do_n, Do_n+1,..) der Teilnehmer angeschlossen ist, dass zumindest ein Teil der Teilnehmer über eine optische Übertragungstrecke mit nach- bzw. vorgeschalteten opto-elektrischen Wandlern (S/E-Modul_n, S/E-Modul_n+1) am Sternkoppler angeschlossen ist und dass die Ausgänge der Teilnehmer im Sternkoppler über jeweils einen Schalter (3,4) am Eingang des Entscheidungsglieds angeschlossen sind, der zum Ausschluss eines Teilnehmers von der Buskommunikation unabhängig von dem Teilnehmer steuerbar ist.

2. Datenbus nach Anspruch 1, **dadurch gekennzeichnet, dass** der Schalter (3,4) adressierbar ist.

## Claims

1. A data bus for a plurality of nodes, which are connected to one another via a star coupler (K), **characterised in that** the input signals (Di_n, Di_n+1,...) of the star coupler are present in electrical form, **in that** the star coupler contains a logical decision gate (1), to the inputs of which the outputs of the nodes are connected and to which the input signals (Di_n, Di_n+1,...) are routed, **in that** the output of the decision gate in the star coupler is connected in parallel via an electrical line to the inputs (Do_n, Do_n+1,...) of the nodes, **in that** at least some of the nodes are connected via an optical transmission segment with downstream or upstream opto-electrical transducers (S/E-Module_n, S/E-Module_n+1) to the star coupler and **in that** the outputs of the nodes in the star coupler are connected via a respective switch (3, 4) to the input of the decision gate, which can be controlled to exclude a node from the bus communication independently of the node.

2. A data bus according to claim 1, **characterised in that** the switch (3, 4) can be addressed.

## Revendications

1. Bus de données pour plusieurs noeuds reliés entre eux par un coupleur en étoile (K),
**caractérisé en ce que**
- les signaux d'entrée (Diₙ, Diₙ₊₁) du coupleur en étoile sont présents sous forme électrique, ce coupleur contenant un organe logique de décision (1) dont les entrées sont reliées aux sorties des noeuds, et qui reçoit des signaux d'entrée (Diₙ, Diₙ₊₁),
- la sortie de l'organe de décision dans le coupleur en étoile est raccordée aux entrées (Doₙ, Doₙ₊₁) par un conducteur électrique monté en parallèle,
- au moins une partie des noeuds est raccordée par un chemin de transmission optique à des convertisseurs opto-électriques montés en amont ou en aval (modules S/Eₙ, S/Eₙ₊₁) sur le coupleur en étoile,
- les sorties des noeuds dans le coupleur en étoile sont raccordées chacune par un commutateur (3, 4) à l'entrée de l'organe de décision qui peut être commandé indépendamment du noeud pour isoler celui-ci de la communication de bus.

2. Bus de données selon la revendication 1,
**caractérisé en ce que**
le commutateur (3, 4) peut être adressé.
